# EUROPEAN PATENT APPLICATION

(11) **EP 0 907 139 A2**
(43) Date of publication of application: **07.04.1999**
(21) Application number: 98202964.7
(22) Date of filing: 04.09.1998
(51) Int. Cl.: G06K 7/10

(54) **Method and apparatus for reading invisibly encoded sound data on an object**

(30) Priority: 16.09.1997 US 931575; 18.06.1998 US 99627
(71) Applicant: EASTMAN KODAK COMPANY, Rochester, New York 14650 (US)
(72) Inventor: Soscia, Peter P., Rochester, New York 14650-2201 (US); Small, Jeffery A., Rochester, New York 14650-2201 (US); Reiter, Thomas C., Rochester, New York 14650-2201 (US)
(74) Representative: Lewandowsky, Klaus, Dipl.-Ing.

(57) **Abstract**

Both a method and apparatus for reading sound data invisibly imprinted on the surface of an object is provided. In the method, compressed sound data is optically imprinted onto the surface of an object as a two-dimensional encodement (12). An image of the encodement is focused onto an image sensor array (44, 46) that generates a digital signal representative of the image. The digital signal is processed into an expanded analog signal representative of the sound represented by the encodement. The analog signal is then converted into sound. The method is implemented by a hand-held data reader wand (70, 85) having a lens (72), an image sensor, a microprocessor (50) for decoding the output of the image sensor array into an analog sound signal, and a sound transducer such as a speaker. The method may be used to record and play back a voice commentary on not only sheet material objects such as photographs and greeting cards, but also three-dimensional articles such as clothing (98) and furniture (99, 100).

## Description

### CROSS REFERENCE TO RELATED APPLICATIONS

The application is a continuation-in-part of U.S. patent application Serial No. 08/931,575 filed September 16, 1997.

### FIELD OF THE INVENTION

This invention generally relates to the reading of a sound message invisibly encoded onto an object by a hand-held reader wand that optically senses the encodement and translates it back into sound. While the invention finds particular application with respect to the reading of sound messages encoded onto photographic prints, it may be more generally applied to virtually any object.

### BACKGROUND OF THE INVENTION

Printing of visually observable data on still image reflection prints is known. For example, it is well known to optically expose time and date data on photographic film in a camera which is the reproduced during the photographic printing process in human readable form on the print. Typically, this optically reproduced data appears within the image area of the print. A disadvantage of this arrangement is that it obscures the image area and interferes with pleasurable viewing of the print. Moreover, it is limited to a small amount of data, such as day and date.

It is also known to imprint data, including sound-related data, on a still image reflection print in the form of machine readable code such as a bar code which is observable to the human eye but requires an electronic sensor to read and decode the data. An example of such an arrangement is disclosed in U.S. Patent 5,313,235. A disadvantage of such an arrangement is that the bar code obscures the image if printed on front and also offers a limited amount of data that is not conducive to imprinting sound information that was recorded during the picture taking event or for recording historical annotations while viewing the print. In the '235 patent, the imprinted data constitutes essentially a memory address pointing to an address location in a remote memory device where the actual sound data is stored. The actual sound data is not physically tied to the print. Since the sound information is stored separately from the print, the sound information can become disassociated from the print and lost.

U.S. Patent 4,095,029 is an example of the use of magnetic recording strips on photographic prints for storage of sound information directly on the print. While offering the advantage of keeping the sound information physically associated with the print, it also has certain disadvantages. It provides a limited storage space and uses up available image space when placed on the front of the print. Moving the magnetic strip to the back of the print reduces its accessibility and makes it awkward to reproduce the sound while viewing the print. It requires a magnetic reader head employing relative motion between the head and magnetic strip for signal reproduction. Critical alignment between the reading head and data track, as well as maintaining intimate contact between the head and magnetic strip are important considerations that make magnetic signal reproduction an unattractive option for sound reproduction from still image prints. Additionally, magnetic recording media has a limited life in terms of wear-out and inherent loss of magnetically recorded data over time.

It is known to provide sound tracks on transmissive motion picture film by means of an emulsion coated on the film that is sensitive to non-visible light such as ultraviolet or infrared. A difficulty with this technique is that only small fragments of a complete sound recording is placed on each film image frame which would be unsuitable for use with still image prints in which entire sound data files are associated with a single print.

There is therefore a need for an arrangement of storage and reproduction of sound information and other possible data on objects such as still image reflection prints that avoids the problems and disadvantages described above. There is, in particular, a need for an arrangement that keeps recorded data intimately associated with a still image reflection print to which it relates so that it does not easily become lost. The arrangement should be able to store enough data to encompass an extended amount of sound recorded during picture taking and also offer convenience and accessibility for reproduction with the image print remaining in an album or other mounting means. It would also be desirable if the recordation and playback of the sound data could be more universally applied to objects other than photographic prints where a sound message or commentary would be useful.

### SUMMARY OF THE INVENTION

Generally speaking, the invention is both a method and apparatus for reading invisibly printed sound data on an object. In the method of the invention, compressed sound data is optically imprinted onto the surface of an object as a two-dimensional encodement invisible to the human eye. The encodement is optically read by focusing light emanating from the object onto an image sensor array, processing the electrical data generated by the image sensor array in response to the focused light image, and then converting the sound data into sound. While the sensor array is preferably a CMOS-type array, it may alternatively be a CCD. Moreover, the sensor array may be either a two-dimensional or one-dimensional array. In the case where the sensor is a two-dimensional array, it preferably has a resolution capacity of at least .3 mega pixels. If the sensor is a linear sensor array, it preferably has a resolution capacity of 100 pixels per inch and more preferably 200 pixels per inch. Additionally, when a linear sensor array is used, the method may also include the step of sweeping the focused light emanating from the object across the linear array by means of a movable mirror in order to obviate the need for a manually-implemented scanning step.

Preferably, the sound data imprinted on the surface of the object is both compressed and at least partially redundant so as to maximize the amount and duration of sound that can be practically imprinted on the object, and to minimize the errors in translating the encodement back into sound. The optical and printing step may be implemented by infrared, ultraviolet, or fluorescent inks which are normally invisible to the human eye. Where the object includes a reflective image, the optical imprinting may be incorporated into the image in a visually non-perceptible manner.

While the object imprinted upon may be a photograph, the object may also encompass virtually any type of sheet material where a sound recording would be desirable. Examples of such sheet materials include, but are not limited to, sheet music, concert leaflets, playing cards, trick cards, flip cards, the board of a game, calendars, any page of a publication, the front pages of periodicals such as magazines or newspapers, advertising brochures and leaflets, sticker prints, and business cards. Applications of the method that are particularly beneficial to sight impaired individuals include food and beverage labels, and paper money. The objects imprinted upon may also include textile articles, such as T-shirts or other articles of clothing. Finally, the object imprinted upon may include more three-dimensional type objects, such as bookbindings, book covers, covers for CDs, video discs, audio and video cassettes, articles of furniture, and structural parts of building (that is, walls, doors, etc.), these last applications being of principal benefit to sight impaired individuals, or persons working in low-light conditions (such as photographic dark rooms, and other low-light conditions). Other applications for the method include the display structures for photographs, such as picture frames, frame glasses or album pages. Finally, the method of the invention may advantageously be applied to greeting cards, post cards, or the headings of personalized or business-type stationery.

The invention also encompasses an apparatus for reading the aforementioned two-dimensional encodement. Preferably, the apparatus is a reader wand that comprises an image sensor array for generating an electronic output signal in response to a focused image of the encodement, a lens for focusing an image of the encodement onto the image sensor array, a data decoding unit for decoding the electronic output signal into an analog sound signal corresponding to the sound represented by the optical encodement, and a sound transducing means for converting the analog sound signal into sound. As was the case in the method of the invention, the image sensor may be either a twodimensional or one-dimensional CMOS or CCD array. When a linear sensor array is used, the reader wand preferably includes a movably mounted mirror for receiving the focused image of the encodement from the lens and scanning it across the linear array so as to obviate the need for a manually implemented scanning operation.

### BRIEF DESCRIPTION OF THE DRAWINGS

Figures 1a and 1b are illustrations of a still image reflection print showing data imprinted thereon in accordance with an aspect of the invention;
Figure 2 is a block diagram illustrating conversion of an audio signal to a printed code utilizing data compression, encoding, and printing in accordance with an aspect of the invention;
Figure 3 is a block diagram illustrating a system for reading and decoding compressed audio data recorded on a still image reflection print in accordance with another aspect of the invention;
Figure 4a illustrates structure and functional blocks of a reader wand useful in reading and decoding data imprinted on a still image reflection print in accordance with the invention;
Figure 4b illustrates a reader wand employing an area array scanner obviating the need for want motion in scanning encoded data on a still image reflection print;
Figure 4c illustrates an alternative embodiment of a reader wand of Figure 4a;
Figure 5 illustrates a swipe motion reader for use in reading data on a still image reflection print by scanning motion of the wand reader across a two-dimensional printed encodement on the image print, and
Figure 6a, 6b, and 6c illustrate how the invention may be applied to any one of a number of different objects.

### DETAILED DESCRIPTION OF THE INVENTION

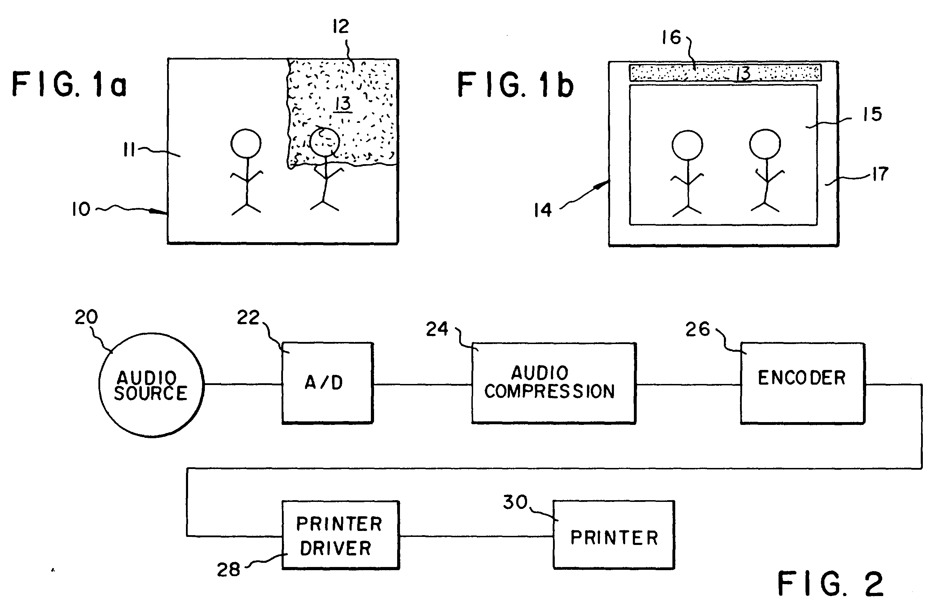

Referring to Figure 1a, a still image reflection print 10 is shown on which a two-dimensional array 12 of encoded variable sound data is invisibly imprinted directly on a surface portion 13 of the print entirely within the image area 11. By "variable data" is means data that varies from print-to-print and contains informational subject matter which is associated with the image print. Print 10 may be produced utilizing any one of well known image printing processes. For example, it may be produced by optical exposure onto photographic emulsions of a photographic print paper of a positive or negative film image or of a CRT, LCT, LED, or laser image derived from a digital image file. Other examples would be a digital image print produced by means of a color inkjet printer or a thermal dye transfer printer. Another example would be a print produced by means of an electrophotographic process. In Figure 1 b, a similar image print 16 is shown in which the image area 15 is contained within a non-image border 17 and the invisible two-dimensional data encodement of sound 16 is contained entirely within the border 17. It will be appreciated that the data encodement may alternatively partially overlap the image area 15. The manner in which the reflection print is produced is conventional and does not, by itself, represent a part of the invention described herein.

In accordance with a particular feature of the invention, the encodement areas 12 and 16 comprise a two-dimensional array of encoded data imprinted onto surface portion 13 with an ink or dye that is invisible to the human eye when viewed under normal viewing conditions. As used herein, the phrase "under normal viewing conditions" means viewing under sunlight or normal room illumination such as incandescent or fluorescent lights or the like. As shown in Figure 1a the optically imprinted data is entirely within the image area of the print 10 although it will be appreciated that some of the data encodement may extend outside the image area into the surrounding border if one exists or may be contained entirely within the border area as shown in Figure 1b. Because the optical encodement is invisible to the human eye under normal viewing conditions, it is possible to have the imprinted, encoded data cover just some or even all of the image area without interfering with viewing of the image print. The data area may be imprinted by thermal printing based on a thermal dye transfer process utilizing any well known dye having significant spectral absorption in the infrared region and virtually none in the visible spectrum. Other techniques usable would be inkjet printing with an ink having significant absorption in the infrared region and none in the visible spectrum. Alternatively, the imprinting may be accomplished by means of special photographic print paper having an infrared absorbing layer exposed with the two-dimensional encoded array before, during, or after the image printing process.

The code imprinting process may utilize materials other than an infrared absorption material. For example, a dye or pigment having absorption in the ultraviolet region and virtually none in the humanly visible spectrum may be used. A fluorescent dye may also be used of the type which can be excited to fluoresce in a portion of the spectrum that is not visible to the human eye. The encoded data preferably comprises a two-dimensional bar code, created and imprinted as described below, representing sound information recorded in association with the image print. The sound may be recorded in the camera at the time of picture taking and transferred to the print at the time the print is produced, i.e., after return of the reflection print to the user, and printed thereon by a suitable printer as described above thus replacing the conventional notion of handwritten notes on the back of the print.

Turning now to Figure 2, there is shown a system for encoding audio information into a data format which is suitable for imprinting onto an image print as shown in Figure 1. In Figure 2, 20 represents a source of audio signal which might be a camera microphone or prerecorded audio or audio generated after the image print is printed. If the signal from source 20 is in analog form it is applied to an A/D converter 22 for conversion to digital form and then applied to an audio compression module 24 which includes an algorithm which reduces the amount of digital data required to represent the audio signal. If the audio signal from source 20 is in digital form the A/D unit 22 is bypassed. An example of a suitable audio compression module is Digital Voice Systems, Inc., AMBE-1000 Voice Coder.

The compressed audio data is then applied to an encoding module 26 where the data is encoded into a two-dimensional data array utilizing, for example, the known format of AIM Standard PDF 417. Software and hardware for encoding and rendering the data according to this standard is obtainable from Symbol Technologies, Inc. as a part of a LS 4904 S2 Scanner System. Another example is an encodement known as "Datastrip" available from Datastrip Corporation. An even more preferred encodement is commercially available under the trade name "PaperDisk" from Cobblestone Software, Inc., located in Lexington, Massachusetts, USA. "Paper Disk" encodement is preferred due to its robustness; that is, it scheme of providing redundant information at different locations within the encodement area 12,16. It is also preferred due to its ability to be optically decoded without error when skewed, that is, tilted at an angle 15° - 20° from perpendicular with respect to the centerline of the lens used in the reader wand.

The encoded data array is rendered into a printable format by means of module 28 which formats the encoded data in a known manner into a format appropriate for utilization by printer 30. Printer 30 may be a thermal dye transfer printer, inkjet printer, electrophotographic printer or the like adapted for printing the medium described above directly onto an existing image print. Alternatively, unit 30 may comprise a latent image exposure apparatus for exposing the compressed, encoded data via an LCD mask, CRT, LED, or laser printer to create a two-dimensional encoded latent image array on the special print paper described above having the spectrally limited layer formed on the print paper.

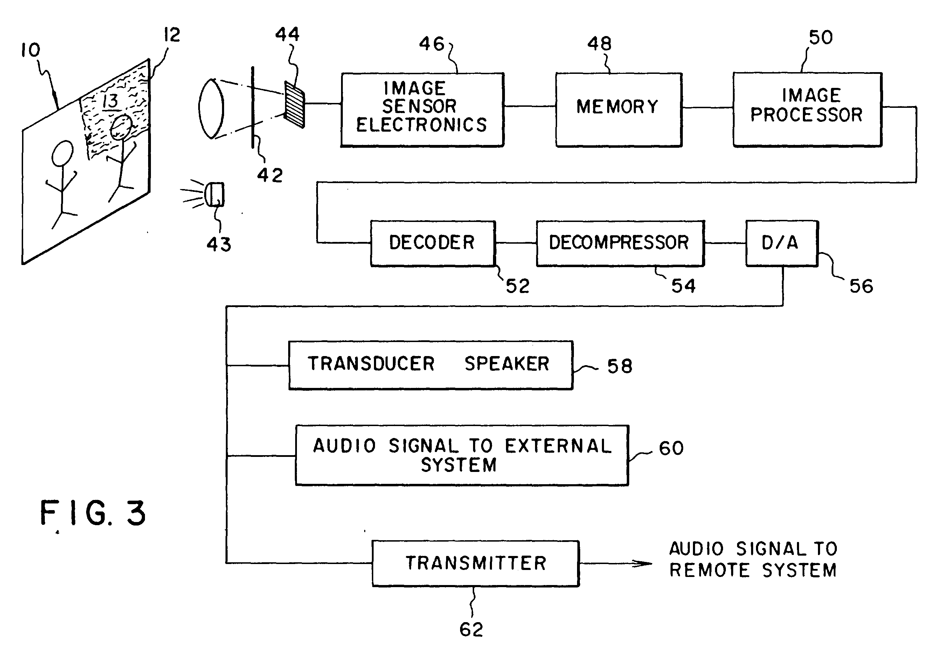

Having created an image print with superimposed encoded data as shown in either of Figures 1a or 1b utilizing the encoding and printing apparatus of Figure 2, there will now be described an apparatus for reading, decoding, and playing back to the data with reference to the system shown in Figure 3. Print 20, which may be an album or frame and bearing a two-dimensional data array 12 as described above, is "read" by reader apparatus comprising optical focusing system 40 having a lens, a spectral bandpass filter 42, and an image reader comprising a CCD or CMOS image sensor 44 and image sensor electronics 46 for converting the output of the sensor to a digital signal which is then stored in memory unit 48. The spectral bandpass filter 42 is of the type which is transparent to the wavelength of light modulated by the two-dimensional data array imprinted by the "invisible" material on the image print and is opaque to other light reflected from the image print. An auxiliary light source 43, having a spectral illumination characteristics which make the encodement visible to the image sensor 44, may be included to enhance the detection of the two-dimensional data array. Image processor 50 retrieves the data from memory unit 48 and manages the order in which the data is decoded and decompressed in decoder 52 and decompressor 54. The operations in units 52 and 54 are essentially the inverse of the compression and encoding operation described in Figure 2 and are performed by the Digital Voice Systems and Symbol Technologies software described above. The digital data output from decompressor 54 is converted to an analog signal by D/A converter 56 and applied to one or more output devices such as a speaker 58, or to remote transducer units via a cable 60 or transmitter 62.

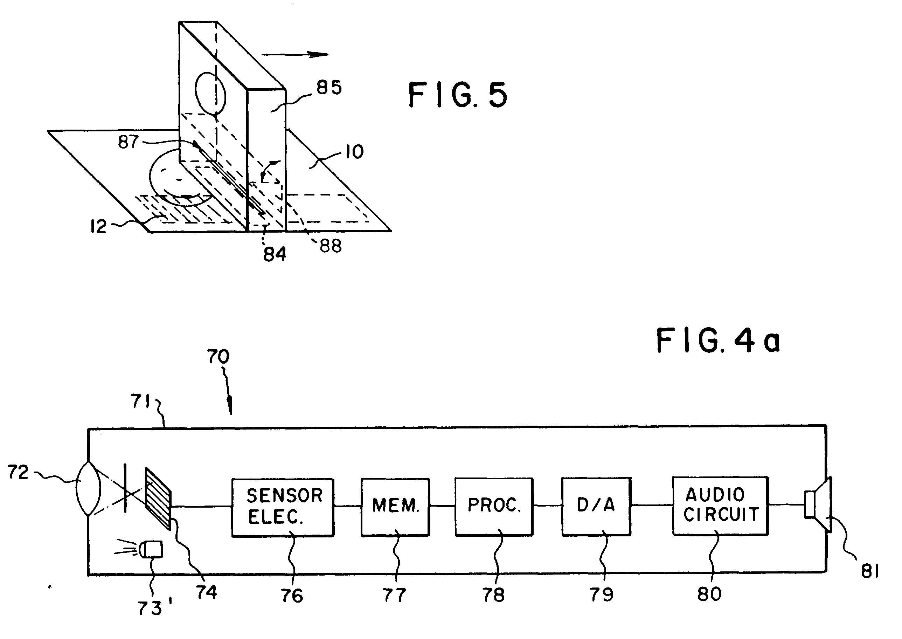

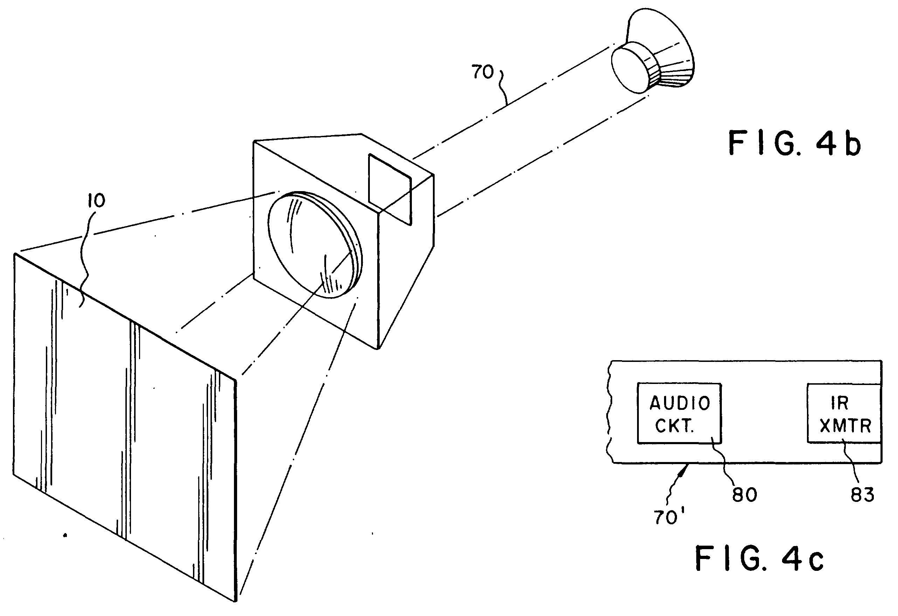

Figure 4a shows a hand-held wand unit 70 that incorporates the spectral filter and the circuit and processing modules described with respect to Figure 3, including a built-in speaker 81. To this end, the wand unit 70 comprises a housing 71 containing a focusing lens 72, a spectral filter 73, which may be coated directly on the lens 72, and a two-dimensional image sensor 74 which may be, for example, a video graphics array (VGA) sensor having a resolution of 640 x 480 pixels of a type well known in the art, or a higher resolution 16 mega pixel Model KAF-6300 manufactured by the Eastman Kodak Company located in Rochester, New York, USA. An auxiliary light source 73' similar to light source 43 of Figure 3, may be included to enhance detection of the data array. In this embodiment, the two-dimensional image sensor is used to capture the entire twodimensional data array on the image print as shown in Figure 4b without the user being required to move the wand in a scanning motion over the print. The wand further comprises image sensor electronics 76, memory 77, processor 78, D/A converter 79, and audio circuit 80 feeding built-in speaker 81. Alternatively, in a transmitting type of wand unit 70, as shown in Figure 4c, audio circuit 80 may feed a transmitter unit 83, such as an infrared transmitter, for sending the audio information to a remote audio playback unit (not shown). Processor 78 includes the functions of image processor 50, decoder 52, and decompressor 54 of the reader apparatus of Figure 3.

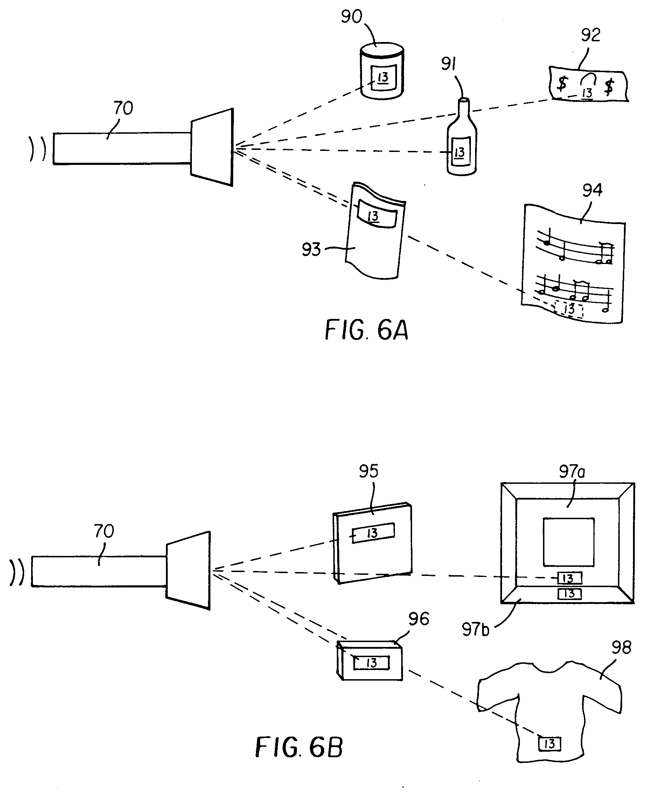

An alternative embodiment of the data reader wand is shown in Figure 5 in the form of a scanning hand-held reader 85 which differs from the wand of Figure 4a in that it incorporates a linear sensor array 87 as the image sensor. This version of the reader wand requires the user to swipe or scan the wand across the image print 10 to sense the data on the two-dimensional data array 12. The linear sensor array may be, for example, a NEC Model 3724 tri-linear array sensor having a resolution of 200 pixels per inch. To obviate the need for the user to swipe or scan the reader 85 across the image print 10, the reader 85 may be modified by the inclusion of a pivotally movable reflective element such as a mirror 88 that moves the image focused by the lens (not shown) in the reader across the linear sensor array 87. In either case, the use of a linear sensor 87 is desirable in that it provides higher resolution with a lower cost sensor array.

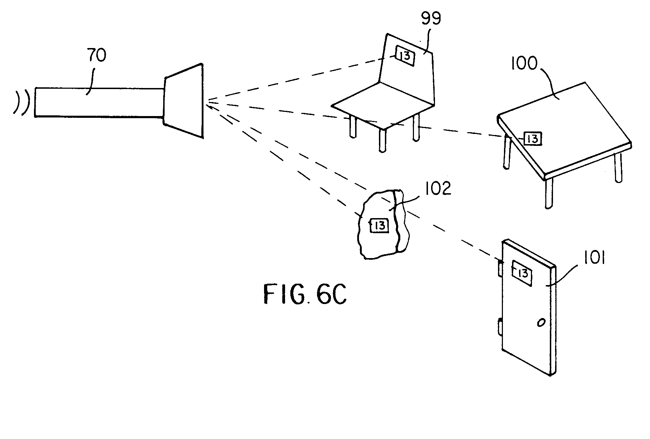

While the application of the invention has been described in detail with respect to photographic prints, it may be universally applied to an almost limitless number of other objects. For example, as shown in Figure 6a, the data reader wand 70 may be used to read compressed sound data on a surface portion of the label of a food product 90, the label of a beverage 91, or even on a piece of paper money 92, these applications being of particular interest to the sight impaired. More generally, the invention may be applied to virtually any type of sheet material, such as the front cover of a magazine 93, newspaper, or other periodical, or on sheet music 94. In this last application, the compressed sound recording could indicate how the melody represented by the various notes would sound if played by a musical instrument, this being of particular interest and benefit to a music student. While not specifically shown in any of the several figures, the invention may be applied to other sheet material objects such as business cards, stationery, the playing boards of board games, any kind of playing cards, trick cards, flip cards, the paying boards of board games, instruction sheets for the assembly of toys or appliances, any page or cover of any book or printed publication. Figure 6b illustrates the application of the invention to more three-dimensional objects, such as CD covers 95, audio or video cassette covers 96, the glass panes 97a or frames 97b that are frequently used to mount and display photographs, prints, paintings or other images, and even textile articles such as clothing 98. While not specifically shown in Figure 6b, the invention may also be advantageously applied to other types of photo or imaging mounts such as the clear plastic covers used to mount photos in albums. In this last regard, it should be noted that the portion of the clothing invisibly printed with sound data could be usefully used as a security tag for the store owner, or washing and care instructions for the purchaser of the article. Finally, as is illustrated in Figure 6c, the invention may advantageously be applied to selected surface portions of other three-dimensional articles such as chairs 99, tables 100, or other articles of furniture, or even structural components of buildings such as doors 101 and walls 102, these last applications again being of particular interest to either the sight impaired or to persons working in low light environments such as photographic dark rooms.

### PARTS LIST

- 10.: Still image reflection print
- 11.: Image area
- 12.: Two-dimensional array
- 13.: Surface portion
- 15.: Image area
- 16.: Invisible two-dimensional data encodement
- 17.: Non-image border
- 20.: Source of audio signal
- 22.: A/D converter
- 24.: Audio compression module
- 26.: Encoding module
- 28.: Module
- 30.: Printer
- 40.: Optical focusing system
- 42.: Spectral bypass filter
- 43.: Auxiliary light source
- 44.: Image sensor
- 46.: Image sensor electronics
- 48.: Memory unit
- 50.: Image processor
- 52.: Decoder
- 54.: Decompressor
- 56.: A/D converter
- 58.: Speaker
- 60.: Cable
- 62.: Transmitter
- 70.: Hand-held wand unit
- 71.: Housing
- 72.: Focusing lens
- 73.: Spectral filter
- 74.: Image sensor
- 76.: Image sensor electronics
- 77.: Memory
- 78.: Processor
- 79.: D/A converter
- 80.: Audio circuit
- 81.: Speaker
- 83.: Transmitter unit
- 85.: Scanning hand-held reader
- 87.: Linear sensor
- 88.: Mirror
- 90.: Food product
- 91.: Beverage
- 92.: Paper money
- 93.: Magazine
- 94.: Sheet music
- 95.: CD covers
- 96.: Audio/video cassette covers
- 97a.: Glass panes
- 97b.: Frames
- 98.: Clothing
- 99.: Chairs
- 100.: Tables
- 101.: Doors
- 102.: Walls

## Claims

1. A method of storing and reading sound data, characterized by the steps of:
optically imprinting compressed sound data onto an object as a two-dimensional encodement (12) invisible to the human eye;
optically reading said encodement by focusing light emanating from said object onto an image sensor array (44, 46);
processing electrical data generated by said image sensor array in response to said focused light into sound data, and
converting said sound data into sound.

2. The method of storing and reading sound data as defined in claim 1, wherein said sensor array is a linear sensor (87), and said optical reading step includes the step of relatively moving said focused light from said object over said linear sensor.

3. The method of storing and reading sound data as defined in claim 2, wherein said relative movement step is implemented by moving a mirror (88) that reflects said focused light from said object across said linear sensor array.

4. The method of storing and reading sound data as defined in claim 1, wherein said object includes an image, and said compressed sound data is non-perceptibly incorporated into said image on said object.

5. A hand held data reader wand for reading sound data imprinted as a two-dimensional optical encodement on a surface of an object by means of an imprinting material invisible to the human eye, the wand characterized by:
an image sensor array for generating an electronic output signal in response to a focused image of said encodement;
a lens (72) for focusing an image of said encodement onto said image sensor array;
data decoding unit for decoding said electronic output signal into an analog sound signal corresponding to the sound represented by the optical encodement, and
sound transducing means for converting said analog sound signal into sound.

6. The hand held data reader wand for reading sound data as defined in claim 5, further comprising a movable mounted mirror for receiving said focused image of said encodement and moving it across said linear array.
